# EUROPÄISCHE PATENTSCHRIFT

(11) **EP 0 696 972 B1**
(45) Veröffentlichungstag und Bekanntmachung des Hinweises auf die Patenterteilung: **05.03.1997**
(21) Anmeldenummer: 94915075.9
(22) Anmeldetag: 21.04.1994
(51) Int. Cl.: B60T 8/36

(54) **ELEKTROHYDRAULISCHE DRUCKREGELVORRICHTUNG**
ELECTRO-HYDRAULIC PRESSURE REGULATING DEVICE
DISPOSITIF ELECTRO-HYDRAULIQUE DE REGULATION DE PRESSION

(30) Priorität: 07.05.1993 DE 4315206
(43) Veröffentlichungstag der Anmeldung: 21.02.1996
(73) Patentinhaber: ITT Automotive Europe GmbH, 60488 Frankfurt (DE)
(72) Erfinder: STEFFES, Helmut, D-65795 Hattersheim 3 (DE); REINARTZ, Hans-Dieter, D-60439 Frankfurt am Main (DE)
(86) Internationale Anmeldenummer: EP9401233
(87) Internationale Veröffentlichungsnummer: WO9426568

(56) Entgegenhaltungen:
- EP-A- 0 105 219
- EP-A- 0 373 551
- WO-A-89/10286
- WO-A-91/10583
- WO-A-92/12878
- DE-A- 3 440 103
- DE-A- 4 013 875

## Beschreibung

Die Erfindung betrifft eine elektrohydraulische Druckregelvorrichtung, insbesondere Bremsdruckregelvorrichtung, nach dem Oberbegriff des Anspruchs 1.

Es sind bereits elektrohydraulische Druckregelvorrichtungen bekannt. Hierzu wird beispielhaft auf die Ausführungsvarianten der internationalen Veröffentlichung WO 92/12878 verwiesen, wonach über die bereits hinreichend bekannte Blockbauweise des Ventilaufnahmekörpers hinaus der Deckel mittels eines plattenförmigen Trägerelementes unterteilt ist, um einerseits einen elektronischen Regler aufzunehmen, andererseits die elektrische Verbindung zwischen dem elektronischen Regler und den an den Elektromagnetventilen überstehenden Kontaktelementen herzustellen. Der Deckel ist mit den Spulen der Elektromagnetventile auf die Ventildome des Ventilaufnahmekörpers aufgesteckt, wobei zur Herstellung des elektrischen Anschlusses zwischen den Kontaktelementen und dem im Deckel integrierten elektronischen Regler nicht gezeigte Steckkontakte oder Lötkontakte vorgesehen sind.

Die vorbeschriebene Druckregelvorrichtung ist bezüglich der Ventilspulenaufhängung im Deckel, wie auch im Hinblick auf eine vereinfachte, sichere elektrische Verbindung der Spulen mit der Steuer- und Regelelektronik zu modifizieren, um die Herstellung, Funktionsprüfung und Instandsetzung vereinfachen zu können.

Folglich besteht die Aufgabe der Erfindung darin, die aus dem genannten Stand der Technik bekannte Druckregelvorrichtung derart zweckmäßig zu überarbeiten, um eine kompakte sowie funktionsoptimierte Druckregelvorrichtung zu schaffen, die möglichst einfach herzustellen, zu prüfen und zu warten ist, wobei unterschiedliche Wärmedehnungen der Bauteile sowie äußere Beanspruchungen möglichst spannungsfrei aufgenommen werden sollen.

Diese Aufgabe wird erfindungsgemäß durch die kennzeichnenden Merkmale des Patentanspruchs 1 gelöst, wonach das Trägerelement mehrere Öffnungen aufweist, in die mehrere an den Spulen angebrachte Verankerungen formschlüssig eingreifen, wobei die elektrischen Kontaktelemente der Spulen zugentlastet sind.

Weitere Merkmale, Vorteile und Anwendungsmöglichkeiten der Erfindung gehen aus der folgenden Darstellung eines Ausführungsbeispiels hervor.

Es zeigen:
- Figur 1: einen Teilschnitt in der Seitenansicht der erfindungsgemäßen Druckregelvorrichtung,
- Figur 2: eine Draufsicht auf die Druckregelvorrichtung.

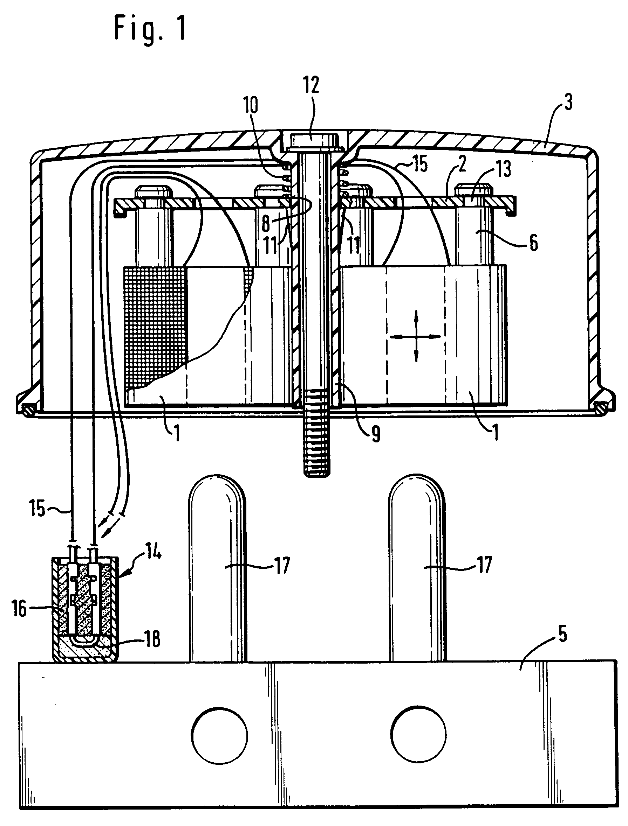

Die Figur 1 zeigt eine Seitenansicht der erfindungsgemäßen Druckregelvorrichtung mit einer Skizzierung der Grundkomponenten. Die dargestellte Druckregelvorrichtung besteht aus einem im Profilschnitt gezeigten Deckel 3 und einem blockförmigen, aus Stahl oder Leichtmetall gefertigten Ventilaufnahmekörper 5. Der Deckel 3 nimmt an seinem mittig angeordneten, hülsenförmigen Fortsatz 9, der in den Deckel 3 gerichtet ist, ein als Trägerelement 2 bezeichnete horizontale Kunststoffplatte auf, die aus Epoxyd-Glasfaserwerkstoff besteht und die mittels ihrer zentral gelegenen Bohrung 8 vom Fortsatz 9 derart durchdrungen ist, daß trotz eines Formschlusses zwischen der Bohrung 8 und dem Fortsatz 9 eine ausreichende, allseitige Beweglichkeit des Trägerelementes 2 gewährleistet ist. Damit wird eine ungehinderte Zentrierung der am Trägerelement 2 befestigten Spulen 1 gegenüber den Ventildomen 17 des Ventilaufnahmekörpers 5 ermöglicht. Der Formschluß zwischen der Bohrung 8 und dem Fortsatz 9 kommt mittels eines als Clips wirksamen Formschlußmittels 11 zustande. Zur formschlüssigen Befestigung der Spulen 1 am Trägerelement 2 werden paarweise an den Spulen 1 angeordnete Zylinderstifte verwendet, die als Verankerung 6 mit ringförmigen Nuten 13 versehen sind. Die Verankerungen 6 greifen in die schlüssellochförmigen Öffnungen 4 im Trägerelement 2 ein. Die so im Trägerelement 2 verankerten Spulen 1 lassen sich durch das Spiel des Fortsatzes 9 in der Bohrung 8 des Trägerelementes 2 im erforderlichen Montagetoleranzbereich ausrichten, wobei eine zwischen dem Trägerelement 2 und dem Deckel 3 eingespannte Druckfeder 10 für eine nachgiebige Axialausrichtung der Spulen 1 gegenüber dem Ventilaufnahmekörper 5 sorgt. Zweckmäßig ist die Druckfeder 10 über den Fortsatz 9 gestülpt und damit radial geführt. Der Fortsatz 9 nimmt gleichzeitig eine Schraube 12 zur Befestigung des Deckels 3 auf dem Ventilaufnahmekörper 5 auf. Jede Spule 1 hat zwei wasserdicht eingespritzte Kabel als Kontaktelemente. Diese gehen direkt auf den Kabelverbinder 14. Es sind vorteilhaft keine Lötstützpunkte notwendig. Damit sind an den Spulen 1 einzelne, zugentlastete Kabel 15 angebracht, die steckbar oder verlötbar in einem Kabelverbinder 14 auf dem Ventilaufnahmekörper 5 befestigt sind und innerhalb einer Kappe des Kabelverbinders 14 mit dem Kontaktträger 18 durch eine Vergußmasse 16 korrosionsgeschützt umschlossen sind. Die Kappe des Kabelverbinders 14 weist ein im wesentlichen U-förmiges Stützprofil auf und bildet einen Rahmen zur Aufnahme des Kontaktträgers 18 und zur Aufnahme der in der Vergußmasse 16 eingebetteten Kabelsteck- bzw. Lötverbindung.

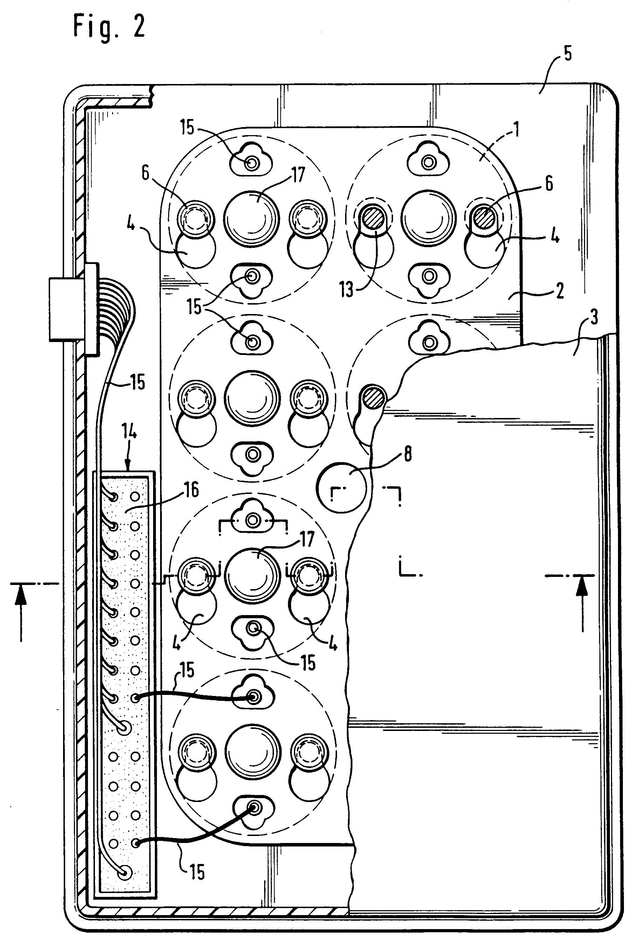

Die Figur 2 zeigt eine Draufsicht auf das gegenüber den Ventildomen 17 am Ventilaufnahmekörper 5 ausgerichtete Trägerelement 2. Auf eine Gesamtansicht des mit dem Trägerelement 2 verbundenen Deckels 3 wurde zum Zwecke der Veranschaulichung der erfindungswesentlichen Einzelheiten verzichtet. Seitlich zu den beiden Spulenreihen angeordnet, befindet sich der rahmenförmige Kabelverbinder 14 mit den einzelnen zu den Spulen 1 bzw. zu einer peripher angeordneten Steuer- und Regelelektronik führenden Kabeln 15, die von der Vergußmasse 16 umschlossen sind. Das Trägerelement 2 nimmt in seinen schlüssellochförmigen Öffnungen 4 die an den Spulen 1 befestigten Zylinderstifte auf, während die zwischen den schlüsselförmigen Öffnungen 4 gelegenen Ausstanzungen des Trägerelementes 2 von den Ventildomen 17 und den zu den Spulen 1 führenden Kabeln 15 durchdrungen sind. Die zentral im Trägerelement 2 angeordnete Bohrung 8 dient zur Verankerung des am Deckel 3 angebrachten Fortsatzes 9.

Ein wesentlicher Vorteil der Erfindung ist in der kostengünstigen, kleinvolumigen Aufnahme von Vergußmasse im Kabelverbinder 14 zu sehen, die es ermöglicht, daß infolge der zugentlasteten Kabeln 15 eine ungehinderte Beweglichkeit der am Deckel 3 befestigten elastischen Spulenverbindung möglich ist, unabhängig davon, ob es sich um eine Kabellöt- oder Kabelsteckverbindung handelt. Ferner ist durch die Verwendung eines zwischen die elektrische Spulenkontaktierung und der Peripherie angeordneten Kabelverbinders 14 jederzeit eine anwendungsspezifische Kabel-Auswahl zum Anschluß eines peripheren Kabelstrangs möglich. Ein großvolumiges Umspritzen oder Umgießen der Spulenaufhängung im Deckel entfällt, so daß eine kompakte sowie funktionsgerechte Druckregelvorrichtung geschaffen ist.

### Bezugszeichenliste

- 1: Spule
- 2: Trägerelement
- 3: Deckel
- 4: Öffnung
- 5: Ventilaufnahmekörper
- 6: Verankerung
- 8: Bohrung
- 9: Fortsatz
- 10: Druckfeder
- 11: Formschlußmittel
- 12: Schraube
- 13: Nut
- 14: Kabelverbinder
- 15: Kabel
- 16: Vergußmasse
- 17: Ventildom
- 18: Kontaktträger

## Patentansprüche

1. Elektrohydraulische Druckregelvorrichtung, insbesondere Bremsdruckregelvorrichtung, wie Antiblockierregelvorrichtung, Antriebsschlupfregelvorrichtung, mit mehreren elektromagnetisch betätigbaren Hydraulikventilen, die blockförmig an einem Ventilaufnahmekörper (5) angeordnet sind, mit Spulen (1), die den Ventilaufnahmekörper (5) überragen, wobei die Spulen (1) an ihren den Ventilaufnahmekörper (5) überragenden Teilen mit elektrischen Kontaktelementen versehen sind, mit einem Deckel (3), der die überragenden Spulenteile und die Kontaktelemente abdeckt, mit einem Trägerelement (2) an dem die Spulen (1) tragend befestigt sind und das innerhalb des Deckels (3) angeordnet ist, wobei der Deckel (3) oder ein Teil des Deckels (3) als elektronischer Regler oder als Teil für einen elektronischen Regler ausgebildet ist, dadurch **gekennzeichnet**, daß das Trägerelement (2) mehrere Öffnungen (4) aufweist, in die mehrere an den Spulen (1) angebrachte Verankerungen (6) formschlüssig eingreifen, und daß die elektrischen Kontaktelemente als zugentlastete Kabel (15) ausgebildet sind.

2. Elektrohydraulische Druckregelvorrichtung nach Anspruch 1, dadurch **gekennzeichnet**, daß das Trägerelement (2) mit den Spulen (1) im Deckel (3) elastisch gehalten ist.

3. Elektrohydraulische Druckregelvorrichtung nach Anspruch 1 oder 2, dadurch **gekennzeichnet**, daß das Trägerelement (2) mit einer zentral gelegenen Bohrung (8) versehen ist, die von einem am Deckel (3) angebrachten Fortsatz (9) durchdrungen ist, der das Trägerelement (2) hält.

4. Elektrohydraulische Druckregelvorrichtung nach mindestens einem der vorhergehenden Ansprüche 1 bis 3, dadurch **gekennzeichnet**, daß die Öffnungen (4) im Trägerelement (2) zur Aufnahme der Spulen (1) eine Schlüssellochform aufweisen.

5. Elektrohydraulische Druckregelvorrichtung nach einem der vorhergehenden Ansprüche, dadurch **gekennzeichnet**, daß eine elastische, federnde Halterung des Trägerelementes (2) im Deckel (3) durch eine zwischen dem Trägerelement (2) und dem Deckel (3) eingespannte Druckfeder (10) hergestellt ist.

6. Elektrohydraulische Druckregelvorrichtung nach Anspruch 3, dadurch **gekennzeichnet**, daß der Fortsatz (9) am Deckel (3) mit mindestens einem Formschlußmittel (11) versehen ist, das wenigstens eine zentral gelegene Bohrung (8) im Trägerelement (2) zur elastischen Verbindung des Trägerelementes (2) mit den Spulen (1) im Deckel (3) durchgreift.

7. Elektrohydraulische Druckregelvorrichtung nach Anspruch 6, dadurch **gekennzeichnet**, daß der Fortsatz (9) zur Aufnahme einer den Deckel (3) auf dem Ventilaufnahmekörper (5) befestigenden Schraube (12) im wesentlichen hülsenförmig gestaltet ist.

8. Elektrohydraulische Druckregelvorrichtung nach Anspruch 4, dadurch **gekennzeichnet**, daß die Verankerung (6) der Spulen (1) am Trägerelement (2) aus mit Nuten (13) versehenen Zylinderstiften gebildet sind, wobei das Trägerelement (2) mit seinen schlüsselförmigen Öffnungen (4) in die Nuten (13) eingreift.

9. Elektrohydraulische Druckregelvorrichtung nach mindestens einem der vorhergehenden Ansprüche, dadurch **gekennzeichnet**, daß das Trägerelement (2) aus einer Kunststoffplatte, insbesondere Epoxyd-Glasfaserplatte, hergestellt ist.

10. Elektrohydraulische Druckregelvorrichtung nach mindestens einem der vorhergehenden Ansprüche 1 bis 9, dadurch **gekennzeichnet**, daß die Kabel (15) der Spulen (1) zugentlastet an einem innerhalb des Deckels (3) angeordneten Kabelverbinder (14) angeschlossen sind, und daß innerhalb des Kabelverbinders (14) weitere mit den Kabeln (15) steckbare oder verlötbare Kabelanschlüsse angeordnet sind, die von einer Vergußmasse (16) umschlossen sind.

## Claims

1. Electrohydraulic pressure control device, in particular a braking pressure control device, such as an anti-lock control device or traction slip control device, including a plurality of electromagnetically operable hydraulic valves arranged on a valve-accommodating member (5) in a block-type manner, coils (1) which project from the valve-accommodating member (5), the coils (1) having electric contact elements on their parts projecting from the valve-accommodating member (5), a cover (3) which covers the projecting coil parts and the contact elements, a carrier element (2) on which the coils (1) are fixed in a carrying manner and which is arranged within the cover (3), the cover (3) or part of the cover (3) being provided as an electronic controller or as a part for an electronic controller,
**characterized** in that the carrier element (2) includes a plurality of openings (4) into which a plurality of anchoring means (6) fitted to the coils (1) are engaged in a form-locking manner, and in that the electric contact elements are provided as untensioned cables (15).

2. Electrohydraulic pressure control device as claimed in claim 1,
**characterized** in that the carrier element (2) along with the coils (1) is retained elastically in the cover (3).

3. Electrohydraulic pressure control device as claimed in claim 1 or 2,
**characterized** in that the carrier element (2) has a centrally positioned bore (8) through which an extension (9) fitted to the cover (3) and retaining the carrier element (2) extends.

4. Electrohydraulic pressure control device as claimed in at least one of the preceding claims 1 to 3,
**characterized** in that the openings (4) in the carrier element (2) have a keyhole form for accommodating the coils (1).

5. Electrohydraulic pressure control device as claimed in any one of the preceding claims,
**characterized** in that an elastic resilient mounting support of the carrier element (2) in the cover (3) is provided by a compression spring (10) compressed between the carrier element (2) and the cover (3).

6. Electrohydraulic pressure control device as claimed in claim 3,
**characterized** in that the extension (9) on the cover (3) is provided with at least one form-locking means (11) which extends through at least one central bore (8) in the carrier element (2) for elastically connecting the carrier element (2) with the coils (1) in the cover (3).

7. Electrohydraulic pressure control device as claimed in claim 6,
**characterized** in that the extension (9) is substantially shaped like a bushing for accommodating a screw (12) which fixes the cover (3) to the valve-accommodating member (5).

8. Electrohydraulic pressure control device as claimed in claim 4,
**characterized** in that the anchoring means (6) of the coils (1) on the carrier element (2) is formed of cylindrical pins furnished with grooves (13), with the carrier element (2) engaging with its key-shaped openings (4) into the grooves (13).

9. Electrohydraulic pressure control device as claimed in at least one of the preceding claims,
**characterized** in that the carrier element (2) is made of a plastic plate, in particular an epoxy fiberglass plate.

10. Electrohydraulic pressure control device as claimed in at least one of the preceding claims 1 to 9,
**characterized** in that the cables (15) of the coils (1) are connected to a cable connector (14) arranged within the cover (3) in a fashion relieved from tensile load, and in that further cable connections are arranged within the cable connector (14) which are adapted to be plugged or soldered with the cables (15) and are enclosed by a sealing compound (16).

## Revendications

1. Dispositif électro-hydraulique de régulation de pression, notamment dispositif de régulation de pression de freinage, tel que dispositif de régulation antiblocage, dispositif de régulation du glissement de traction, comprenant plusieurs valves hydrauliques à actionnement électromagnétigue, qui sont disposées en forme de bloc sur un corps de logement de valves (5), des bobines (1) qui dépassent du corps de logement de valve (5), les bobines (1) étant pourvues, sur leurs parties qui dépassent du corps de logement de valves (5), d'éléments de contact électrique, un couvercle (3), qui recouvre les parties des bobines qui dépassent et les éléments de contact, et un élément de support (2) sur lequel les bobines (1) sont fixées de manière à être portées et qui est disposé à l'intérieur du couvercle (3), le couvercle (3) ou une partie du couvercle (3) étant réalisé sous forme d'un régulateur électronique ou d'une partie pour un régulateur électronique, caractérisé en ce que l'élément de support (2) comporte plusieurs ouvertures (4) dans lesquelles s'accrochent, par complémentarité de formes, plusieurs éléments d'ancrage (6) montés sur les bobines (1), et en ce que les éléments de contact électrique sont réalisés sous forme de câbles à décharge de traction.

2. Dispositif électro-hydraulique de régulation de pression selon la revendication 1, caractérisé en ce que l'élément de support (2), avec les bobines (1), est maintenu élastiquement dans le couvercle (3).

3. Dispositif électro-hydraulique de régulation de pression selon la revendication 1 ou 2, caractérisé en ce que l'élément de support (2) est pourvu d'un perçage (8) à disposition centrale traversé par une partie en saillie (9) qui est située sur le couvercle (3) et maintient l'élément de support (2).

4. Dispositif électro-hydraulique de régulation de pression selon au moins l'une des revendications précédentes 1 à 3, caractérisé en ce que les ouvertures (4) prévues dans l'élément de support (2) pour recevoir les bobines (1) ont une forme de trou de serrure.

5. Dispositif électro-hydraulique de régulation de pression selon l'une des revendications précédentes, caractérisé en ce qu'un maintien élastique, se comportant comme un ressort, de l'élément de support (2) dans le couverte (3) est produit au moyen d'un ressort de compression (10) disposé sous contrainte entre l'élément de support (2) et le couvercle (3).

6. Dispositif électro-hydraulique de régulation de pression selon la revendication 3, caractérisé en ce que la partie en saillie (9) située sur le couvercle (3) est pourvue d'au moins un moyen d'adaptation par complémentarité de formes (11) qui s'accroche en le traversant sur au moins un perçage (8) qui a une disposition centrale dans l'élément de support (2) et qui sert à la liaison élastique de l'élément de support (2) avec les bobines (1) dans le couvercle (3).

7. Dispositif électro-hydraulique de régulation de pression selon la revendication 6, caractérisé en ce que la partie en saillie (9) est réalisée pratiquement en forme de manchon en vue de recevoir une vis (12) fixant le couvercle (3) sur le corps de logement de valves (5).

8. Dispositif électro-hydraulique de régulation de pression selon la revendication 4, caractérisé en ce que les moyens (6) d'ancrage des bobines (1) sur l'élément de support (2) sont formés de tiges cylindriques pourvues de gorges (13), l'élément de support (2) s'accrochant dans les gorges (13) par ses ouvertures (4) en forme de trou de serrure.

9. Dispositif électro-hydraulique de régulation de pression selon au moins l'une des revendications précédentes, caractérisé en ce que l'élément de support (2) est formé d'une plaque en matière plastique, notamment une plaque époxyde-fibres de verre.

10. Dispositif électro-hydraulique de régulation de pression selon au moins l'une des revendications précédentes 1 à 9, caractérisé en ce que les câbles (15) des bobines (1) sont raccordés, avec décharge de traction, à un connecteur de câbles (14) disposé à l'intérieur du couvercle (3) et en ce que d'autres raccords de câble, qui peuvent être fixés par enfichage ou par soudage sur les câbles (15), sont disposés à l'intérieur du connecteur de câbles (15), ces raccords de câble étant entourés par une masse de remplissage par coulée (16).
